# EUROPÄISCHE PATENTSCHRIFT

(11) **EP 3 953 280 B1**
(45) Veröffentlichungstag und Bekanntmachung des Hinweises auf die Patenterteilung: **01.05.2024**
(21) Anmeldenummer: 20712214.4
(22) Anmeldetag: 03.03.2020
(51) Int. Cl.: B65G 29/00

(54) **BEHÄLTERBEHANDLUNGSANLAGE ZUM BEHANDELN VON BEHÄLTERN ODER DERGLEICHEN**
CONTAINER PROCESSING SYSTEM FOR PROCESSING CONTAINERS OR THE LIKE
INSTALLATION DE TRAITEMENT DE RÉCIPIENTS POUR LE TRAITEMENT DE RÉCIPIENTS OU SIMILAIRES

(30) Priorität: 10.04.2019 DE 102019109446
(43) Veröffentlichungstag der Anmeldung: 16.02.2022
(73) Patentinhaber: KHS GmbH, 44143 Dortmund (DE)
(72) Erfinder: STANG, Siegmar, 55124 Mainz (DE); KRIEG, Andreas, 67596 Dittelsheim-Hessloch (DE)
(86) Internationale Anmeldenummer: PCT/EP2020/055507
(87) Internationale Veröffentlichungsnummer: WO 2020/207665

(56) Entgegenhaltungen:
- EP-A1- 2 383 081
- EP-A2- 2 138 432
- WO-A1-2014/044351
- DE-A1-102011 054 890
- DE-U1-202014 100 458

## Beschreibung

Die Erfindung bezieht sich auf eine Behälterbehandlungsanlage zum Behandeln von Behältern oder dergleichen gemäß Oberbegriff Patentanspruch 1. Ferner betrifft die vorliegende Erfindung ein Verfahren zum Anpassen von Formatteilen einer derartigen Behälterbehandlungsanlage zum Behandeln von Behältern.

Behälterbehandlungsanlagen sind in unterschiedlichen Ausführungen, z.B. als Füllmaschinen, Etikettiermaschinen, Bedruckungsmaschinen, Inspektionsmaschinen, Verpacker und/oder Palettiermaschinen mit geeigneten Transportmitteln bekannt. Ebenso sind verschiedene Arten von Behältern, wie beispielsweise Flaschen oder Dosen, bekannt die in der Behälterbehandlungsanlage transportiert und behandelt werden. Diese können aus Materialien wie Glas, Kunststoff oder Metall bestehen und sowohl in ihrer Größe als auch Form voneinander abweichen. Die Behälter sind insbesondere zum Befüllen mit Flüssigkeiten, wie beispielsweise Getränken, ausgebildet.

Die Behälterbehandlungsanlagen weisen als Führungseinheiten ausgebildete Formatteile auf, die zum Halten und/oder Durchführen der Behälter durch die Behälterbehandlungsanlage ausgebildet sind. Dabei werden die Behälter zum Bearbeiten bzw. Behandeln beispielsweise zum Befüllen oder Etikettieren entlang der Führungseinheiten durch die Behälterbehandlungsanlage von einer Bearbeitungsstation zur Nächsten geführt. Bei derartigen Formatteilen kann es sich beispielsweise um Sterntaschen eines als Transportsterns ausgebildeten Transporteurs, Führungsgeländer mit behälterspezifischen Breiten, oder auch Antriebsschnecken handeln, die im Eingriff und/oder Kontakt mit den Behältern stehen.

Neben bekannten verstellbaren Halte- und Führungselementen, sind die Mehrzahl der Formatteile dabei auf die jeweiligen Eigenschaften der Behälter, wie beispielsweise die Behälterform/-umfang, das Behältergewicht und/oder die Behältergröße, mithin also zusammengefasst die Behältergeometrie anzupassen, um ein genaues Führen der Behälter zu gewährleisten.

Damit die Behälterbehandlungsanlage für unterschiedliche Behälter einsetzbar ist, müssen die Formatteile auf die unterschiedlichen Behältergeometrien, d. h. insbesondere die Behälterhöhe und den Behälterdurchmesser, ausgerichtet und angepasst sein. So ist für eine sichere Führung beispielsweise der ideale Kontaktpunkt des Formatteils an einem Behälter mit geringem Durchmesser und/oder Höhe im Verhältnis zu seiner Position in der Behälterbehandlungsanlage deutlich weiter und/oder niedriger als bei einem im Vergleich dazu bauchigerem und/oder höheren Behälter.

Aus diesem Grund sind die Formatteile auswechselbar an der Behälterbehandlungsanlage angeordnet, so dass bei einer Umstellung der Behälterbehandlungsanlage von einer ersten Behältergeometrie auf eine zweite Behältergeometrie die Formatteile ausgewechselt werden können. Üblicherweise werden eine Mehrzahl von Formatteilsätzen für unterschiedliche Behältergeometrien bevorratet.

Neben der kostenintensiven Bereithaltung von unterschiedlichen Formatteilen für die verschiedenen Behältergeometrien, beziehungsweise Gruppe von Behältergrößen oder Behälterdesigns, ist insbesondere auch die passgenau Ausbildung der Formatteile an die tatsächliche Behältergeometrie aufwendig und kostenintensiv, da die Formatteile üblicherweise hierfür nicht am Aufstellungsort der Behälterbehandlungsanlage angepasst werden können, sondern an den Fertigungsort der Behälterbehandlungsanlage verschickt werden müssen, um dort angepasst zu werden.

In sehr vielen Fällen liegen jedoch der Aufstellungs- bzw. Produktionsort und der Fertigungsort einer solchen Behälterbehandlungsanlage örtlich weit auseinander, nicht selten mehrere hundert, wenn nicht sogar tausende Kilometer. Erschwerend kommt dabei hinzu, dass im Stand der Technik die Formatteile an Hand von durch den Kunden zur Verfügung gestellten Zeichnungen der Behältergeometrie oder alternativ an Hand von Musterbehältern gefertigt werden - und zwar am Fertigungsort der gesamten Behälterbehandlungsanlage.

Oftmals differiert jedoch die Behältergeometrie der vom Kunden bereitgestellten Musterbehälter erheblich von der Behältergeometrie der dann am Produktionsort tatsächlich durch die Behälterbehandlungsanlage zu behandelnden Behälter.

Dies erfordert insbesondere eine Nacharbeitung der Formatteile der Behälterbehandlungsanlage. Hierfür werden die dann nachzuarbeitenden Formatteile vom Aufstellungs- bzw. Produktionsort der Behälterbehandlungsanlage wieder an den Fertigungsort zurückgeschickt, um hier nachgearbeitet und an die tatsächliche Behältergeometrie angepasst zu werden. Anschließend ist ein erneutes Verschicken der dann nachgearbeiteten und an die tatsächliche Behältergeometrie angepassten Formatteile an den Aufstellungs- bzw. Produktionsort der Behälterbehandlungsanlage notwendig. Diese Vorgehensweise verzögert die Inbetriebnahme der gesamten Behälterbehandlungsanlage. Auch bei einer Umstellung der bereits für eine bestimmte Behältergeometrie eingerichteten Behälterbehandlungsanlage auf eine im Vergleich dazu unterschiedliche Behältergeometrie ist diese Vorgehensweise zeitaufwändig und teuer.

Aus der Druckschrift EP 2 138 432 A2 ist eine Vorrichtung zum Umsetzen von Behältern gemäss dem Oberbegriff des Anspruchs 1 bekannt, die eine Vielzahl von Aussparungen umfasst, die gleichmäßig voneinander beabstandet und an mindestens zwei plattenförmigen Segmenten ausgebildet sind. Die Aussparungen sind an dem Außenprofil vorgesehen, wobei die Segmente ein inneres Profil aufweisen, das mittels eines ersten Haltemittels lösbar mit dem Umfangsrand des Zentralkörpers der Vorrichtung verbunden werden kann.

Ferner ist aus der Druckschrift EP 2 383 081 A1 ein Verfahren bekannt, das das Bereitstellen einer Basiseinheit einer adaptiven Saugvorrichtung an einer Tragstruktur einer Handhabungsvorrichtung beinhaltet. Die Basiseinheit weist eine Vertiefungskammer auf, in der ein scheibenförmiges Werkzeug, insbesondere ein Blech, durch Saugvorrichtungen an der Trägerstruktur befestigt ist.

Aufgabe der Erfindung ist es, eine Behälterbehandlungsanlage zum Behandeln von Behältern oder dergleichen anzugeben, dessen Formatteile einfach und zeitsparend an die tatsächliche Behältergeometrie der von der Behälterbehandlungsanlage zu behandelnden Behälter angepasst werden können.

Die Aufgabe wird durch eine Behälterbehandlungsanlage zum Behandeln von Behältern oder dergleichen gemäß den Merkmalen des unabhängigen Patentanspruchs 1 gelöst. Die Unteransprüche betreffen dabei besonders vorteilhafte Weiterbildungen der Erfindung.

Gemäß einem wesentlichen Aspekt bezieht sich die Erfindung auf eine Behälterbehandlungsanlage zum Behandeln von Behältern oder dergleichen, wobei entlang der Behälterbehandlungsstrecke wenigstens ein, an eine Behältergeometrie des zu behandelnden Behälters oder dergleichen zumindest teilweise angepasstes Formatteil mit einer gegebenen Formatteilgeometrie vorgesehen ist, welches lösbar an der Behälterbehandlungsanlage angeordnet ist.

Erfindungsgemäß ist dabei vorgesehen, dass die Behälterbehandlungsanlage zumindest eine Bearbeitungsvorrichtung zur Anpassung der gegebenen Formatteilgeometrie des zumindest einen Formatteils der Behälterbehandlungsanlage an eine durch die tatsächliche Behältergeometrie vorgegebene Formatteilgeometrie aufweist. Damit kann die gegebene Formatteilgeometrie vor Ort, also am Aufstellung- bzw. Produktionsort der Behälterbehandlungsanlage, an die durch die tatsächliche Behältergeometrie vorgegebene Formatteilgeometrie angepasst werden, ohne dabei die Formatteile für eine Anpassung zurück an den Fertigungsstandort der Behälterbehandlungsanlage schicken zu müssen. Dies erspart für die Inbetriebnahme der Behälterbehandlungsanlage, aber auch bei einer Umstellung auf eine andere Behältergeometrie den Zeitverzug des Versendens der Formatteile für die Anpassung und gibt dem Anlagenhersteller während der Installation der Anlage Flexibilität in der Einrichtung der Behälterbehandlungsanlage an unterschiedlichen Behältergeometrien. Durch Anpassung der gegebenen Formatteilgeometrie des zumindest einen Formatteils der Behälterbehandlungsanlage an eine durch die tatsächliche Behältergeometrie vorgegebene Formatteilgeometrie unmittelbar am Aufstellung- bzw. Produktionsort der Behälterbehandlungsanlage, ergibt sich eine extrem kurze Realisierungszeit (Time to Market).

Vorteilhaft kann dabei vorgesehen sein, dass die zumindest eine Bearbeitungsvorrichtung mittels wenigstens einer Schnittstelle fest, jedoch lösbar, an der Behälterbehandlungsstrecke der Behälterhandlungsanlage angeordnet ist. Hierdurch wird sichergestellt, dass die Bearbeitungsvorrichtung an unterschiedlichen Stellen entlang der Behälterbehandlungstrecke einsetzbar ist.

Gemäß einer weiter vorteilhaften Ausführungsvariante kann dabei vorgesehen sein, dass die Bearbeitungsvorrichtung mittels eines Fahrwerks verfahrbar ausgebildet ist, was zur weiteren vereinfachten Bereitstellung der Bearbeitungsvorrichtung an eben den unterschiedlichen Stellen bzw. Bearbeitungspositionen entlang der Behälterbehandlungsstrecke beiträgt.

Gemäß einer nochmals weiter vorteilhaften Ausführungsvariante kann dabei vorgesehen sein, dass die Bearbeitungsvorrichtung zur Anpassung der gegebenen Formateilgeometrie an eine durch die tatsächliche Behältergeometrie vorgegebene Formatteilgeometrie im montierten und/oder demontierten Zustand des entsprechend zu bearbeitenden Formatteils der Behälterbehandlungsanlage ausgebildet ist. Dies ermöglicht eine besonders zeitsparende Anpassung der Formatteile direkt in bzw. an der Behälterbehandlungsanlage.

Gemäß einer nochmals weiter vorteilhaften Ausführungsvariante kann dabei vorgesehen sein, dass die Bearbeitungsvorrichtung zur Anpassung der gegebenen Formateilgeometrie an eine durch die tatsächliche Behältergeometrie vorgegebene Formatteilgeometrie des Formatteils zumindest ein an einer Führungs- und Bewegungseinrichtung angeordnetes Bearbeitungswerkzeug zur mechanischen und/oder schweißenden Bearbeitung zumindest eines Formatteilgeomtrieabschnittes des entsprechenden Formatteils aufweist. Damit kann das Formateile bedarfsgerecht in dem zumindest einen von der vorgegebenen Formatteilgeometrie abweichenden Formatteilgeomtrieabschnitt bearbeitet werden und muss keiner vollständigen Bearbeitung unterzogen werden. Weiterhin ermöglich die Anordnung des Bearbeitungswerkzeuges an der Führungs- und Bewegungseinrichtung eine erhöhte Flexibilität der Bearbeitung. Um eine individuelle steuerbare Bearbeitung, angepasst an das jeweilige Formatteil zu ermöglichen ist vorteilhaft vorgesehen, die Führungs- und Bewegungseinrichtung als eine mehrere Dreh- und/oder Bewegungsachsen aufweisende Roboterkinematik auszubilden, die mehrere Roboterarme aufweist, welche jeweils dreh- oder schwenkbar um eine Drehachse miteinander verbunden sind.

Gemäß einer nochmals weiter vorteilhaften Ausführungsvariante kann dabei vorgesehen sein, dass das zumindest eine Bearbeitungswerkzeug zur spanenden und/oder schleifenden und/oder auftragsschweißenden und/oder wasserstrahlbasierten Bearbeitung des zumindest einen Formatteilgeometrieabschnittes ausgebildet ist. Damit können auch die unterschiedlichsten Formatteilgeomtrieabschnitte bedarfsgerecht bearbeitet werden.

Gemäß einer nochmals weiter vorteilhaften Ausführungsvariante kann dabei vorgesehen sein, dass das zumindest eine Bearbeitungswerkzeug mittels einer Wechselvorrichtung an der Führungs- und Bewegungseinrichtung angeordnet ist. Damit kann das Bearbeitungswerkzeug über die Führungs- und Bewegungseinrichtung gesteuert geführt und betrieben werden.

Gemäß einer nochmals weiter vorteilhaften Ausführungsvariante kann dabei vorgesehen sein, dass an der Führungs- und Bewegungseinrichtung zusätzlich eine Absaugeinrichtung neben dem zumindest einen Bearbeitungswerkzeug vorgesehen ist. Insbesondere bei der spanenden Bearbeitung im eingebauten Zustand des Formatteils kann hierdurch anfallendes Bearbeitungsmaterial umgehend absaugt werden, und verbleibt somit nicht in der Behälterbehandlungsanlage.

Gemäß einer nochmals weiter vorteilhaften Ausführungsvariante kann dabei vorgesehen sein, dass die Behälterbehandlungsanlage zumindest eine Erfassungseinrichtung aufweist, die dazu ausgebildet ist, den in seiner tatsächlichen Behältergeometrie von der gegebenen Formatteilgeometrie abweichenden Formateilgeometrieabschnitt optisch zu erfassen und einen Nacharbeitungsabschnitt zuzuordnen. Vorteilhaft kann die zumindest eine Erfassungseinrichtung an einem Träger und/oder der Führungs- und Bewegungseinrichtung angeordnet und dabei als 3D-Kamerasystem oder als 3D-Lasermesseinrichtung ausgebildet sein.

Erfindungsgemäß ist vorgesehen, dass die zumindest eine Bearbeitungsvorrichtung das zumindest eine Formatteil abhängig von einer in einer Steuereinheit ausgeführten Steuer- und Bearbeitungsroutine an die durch die tatsächliche Behältergeometrie vorgegebene Formatteilgeometrie anpasst. Dies ermöglicht eine durch eine Steuerung automatisierte Anpassung der Formatteilgeometrie. Vorteilhaft ist hierbei die Steuereinheit dazu ausgebildet, abhängig von der durch die tatsächliche Behältergeometrie vorgegebenen Formatteilgeometrie für das zu bearbeitende Formatteil an dem zumindest einen von der vorgegebenen Formatteilgeometrie abweichenden Formateilgeometrieabschnitt wenigstens einen Nacharbeitungsabschnitt auf dessen dreidimensionalen Außenkontur zu definieren, und ausgehend davon die Steuer- und Auswerteroutine zu erzeugen, wobei anschließend das zumindest eine Bearbeitungswerkzeug mittels der Führungs- und Bewegungseinrichtung zumindest an den ermittelten Nacharbeitungsabschnitt gesteuert zu führen und der jeweilige dem Nacharbeitungsabschnitt zugeordnete Formateilgeometrieabschnitt gezielt mittels des zumindest einen Bearbeitungswerkszeuges an die durch die tatsächliche Behältergeometrie vorgegebene Formatteilgeometrie anzupassen.

Gemäß einer nochmals weiter vorteilhaften Ausführungsvariante kann dabei vorgesehen sein, dass die Führungs- und Bewegungseinrichtung eine Handlingseinrichtung aufweist, die vorzugsweise mittels der Wechseleinrichtung an der Führungs- und Bewegungseinrichtung anordenbar ist, wodurch eine automatisierte Demontage der Formatteile aus der Behälterbehandlungsanlage ermöglicht wird.

Gemäß einer nochmals weiter vorteilhaften Ausführungsvariante kann dabei vorgesehen sein, dass die Bearbeitungsvorrichtung einen Werkstückträger zur indexierten Halterung der Formatteile aufweist. Durch die indexierte Befestigung der Formatteile in dem Werkstückträger wird eine definierte Bearbeitungsposition geschaffen, was die Genauigkeit der Bearbeitung durch die Bearbeitungsvorrichtung verbessert.

Schließlich kann in einer nochmals weiter vorteilhaften Ausführungsvariante vorgesehen sein, dass die Bearbeitungsvorrichtung mittels zumindest einer Trennwand von der Behälterbehandlungsstrecke getrennt ist. Hierdurch wird neben der Behälterbehandlungsstrecke ein "geschütztes" Bearbeitungszentrum in unmittelbar örtlicher Nähe zu Behälterbehandlungsanlage bereitgestellt und verhindert, dass Bearbeitungsmaterial in die Behälterbehandlungsanlage gelangt.

Unter "Behälter" im Sinne der Erfindung werden jedwede Behälter verstanden, insbesondere Flaschen, Dosen, Becher etc., jeweils aus Metall, Glas und/oder Kunststoff, vorzugsweise aus PET (Polyethylenterephthalat).

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft und in schematischer Draufsicht eine Behälterbehandlungsanlage zum Behandeln von Behälter oder dergleichen;
- Fig. 2: einen Ausschnitt einer Behälteranlage in perspektivischer Ansicht,
- Fig. 3: ein freigestelltes beispielhaftes Formatteil in einer schematischen Draufsicht,
- Fig. 4: ein schematisches Blockschaltbild einer Steuereinheit zur Ausführung der Steuerroutine der Bearbeitungsvorrichtung
- Fig. 5: eine schematische Ansicht einer beispielhaften Ausführungsvariante einer Bearbeitungsvorrichtung,
- Fig. 6a: eine beispielhafte Ausführungsvariante der Bearbeitungsvorrichtung in einer schematischen Seitenansicht,
- Fig. 6b: eine beispielhafte weitere Ausführungsvariante der Bearbeitungsvorrichtung in einer schematischen Seitenansicht.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

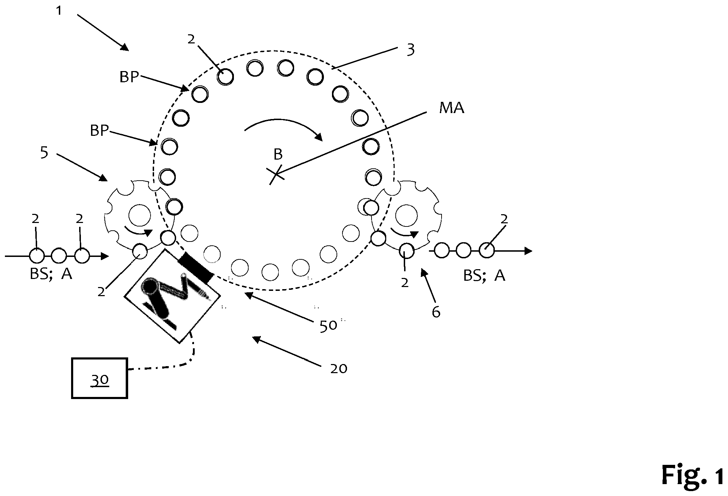

Die in der Fig. 1 allgemein mit 1 bezeichnete Behälterbehandlungsanlage ist dabei zum Behandeln von Behältern 2 oder dergleichen ausgebildet. Mehr im Detail kann die Behälterbehandlungsanlage 1 eine Behälterbehandlungsvorrichtung 3 aufweisen, die als Füllmaschine, Etikettiermaschine, Inspektionsmaschine oder Rinser zum Behandeln von Behältern, wie beispielsweise Flaschen oder Dosen, ausgebildet ist.

Beispielhaft ist die Behälterbehandlungsvorrichtung 3 der Behälterbehandlungsanlage 1 in Figur 1 als Füllmaschine ausgebildet und dient insbesondere zum Füllen von Behältern 2 mit einem flüssigen Füllgut entlang einer in einer Behandlungsrichtung A verlaufenden Behälterbehandlungsstrecke BS.

Die Behälterbehandlungsvorrichtung 3 kann als solche umlaufender Bauart mit einem Rotor ausgebildet sein, der während des Füllbetriebes in einer Drehrichtung B um eine vertikale Maschinenachse MA umlaufend angetrieben ist und an seinem Umfang eine Vielzahl von Behandlungspositionen BP aufweist, denen die zu befüllenden Behälter 2 über einen ersten als Behältereinlauf ausgebildeten Transporteuer 5 zugeführt und denen die behandelten, beispielsweise mit einem flüssigen Füllgut befüllten Behälter 2 an einem zweiten als Behälterauslauf ausgebildeten Transporteuer 6 entnommen werden. Dabei kann der Behältereinlauf 5 beispielsweise als Einschubstern oder Einlaufstern ausgebildet sein.

Insbesondere kann der als Behälterauslauf ausgebildete zweite Transporteuer 6 der Behälterbehandlungsanlage 1 als Auslaufstern oder alternativ auch als Linearförderer ausgebildet sein, der die dann bereits befüllten Behälter 2 übernimmt und entlang der Behälterbehandlungsstrecke BS in Transportrichtung A weiterfördert. Auf dem Winkelbereich der Drehbewegung des Rotors zwischen dem Behältereinlauf 5 und dem Behälterauslauf 6 erfolgt in der Regel das Behandeln der Behälter 2 der Behälterbehandlungsanlage 1 mittels der Behälterbehandlungsvorrichtung 3.

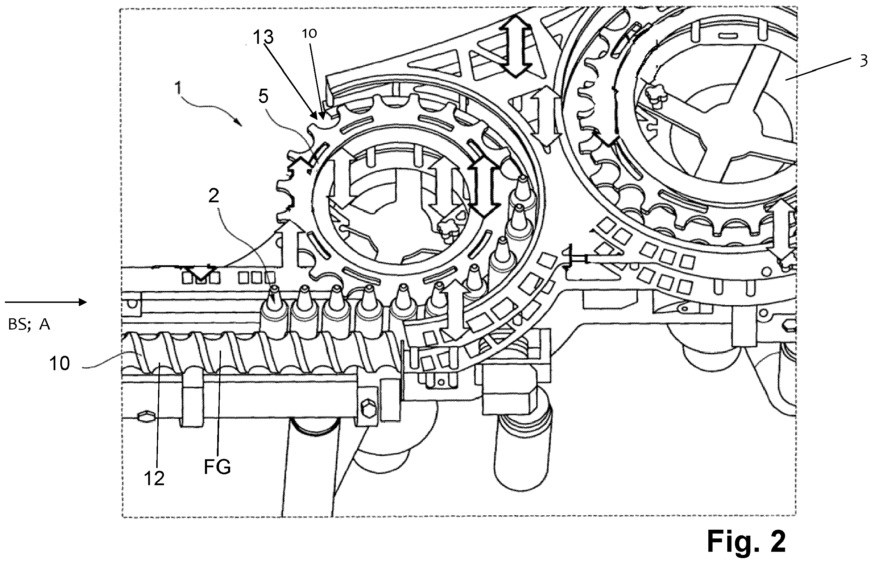

Figur 2 zeigt dabei einen Ausschnitt der Behälterbehandlungsanlage 1 in perspektivischer Ansicht, in der exemplarisch mehrere Formatteile 10 mit unterschiedlich gegebenen Formatteilgeometrien FG dargestellt sind. Mehr im Detail ist dabei beispielhaft der Bereich des ersten Transporteurs 5 sowie der als Füllmaschine ausgebildeten Behälterbehandlungsvorrichtung 3 der Figur 1 gezeigt. Dabei weist die Behälterbehandlungsanlage 1 zum Zufördern der Behälter 2 an den als Behältereinlauf ausgebildeten ersten Transporteur 5 einen Schneckenförderer 12 auf, dessen gewendelter Gewindegang ein Formatteil 10 mit einer gegebenen Formatteilgeometrie FG bildet. Soll dabei ein Behälter 2 mit beispielsweise einem größeren Behälteraußendurchmesser mittels des Schneckenförderer 12 gefördert werden, so muss der als Formatteil 10 ausgebildete Gewindegang des Schneckenförderers 12 in seiner Formatteilgeometrie FG an diesen dann im Vergleich größeren Behälteraußendurchmesser angepasst werden.

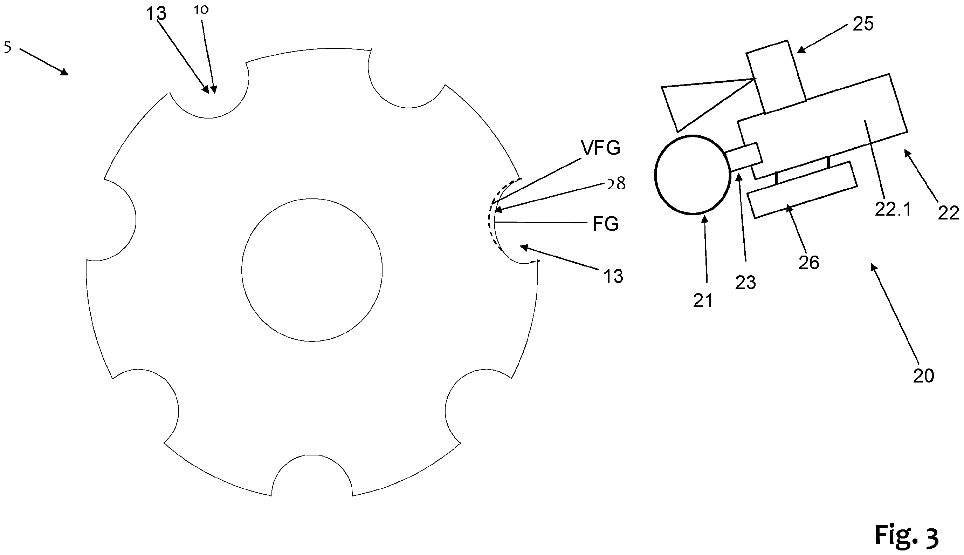

Ein weiteres beispielhaft in Figur 3 gezeigtes Formatteil 10 sind die an dem als Transportstern ausgebildeten Transporteur 5 vorgesehenen Sterntaschen 13, in denen die Behälter 2 während des Transports zumindest teilweise mit ihrem Behälteraußenumfang aufgenommen sind. Auch weist das als Transporttasche 13 ausgebildete Formatteil 10 eine vorgegebene Formatteilgeometrie FG auf. Dabei sind die Formatteile 10 für einen Formatteilwechsel auswechselbar, also insbesondere fest, jedoch lösbar, an der Behälterbehandlungsanlage 1 vorgesehen.

Die Formatteile 10 der Behälterbehandlungsanlage 1 weisen dabei am Aufstellung- bzw. Produktionsort zunächst nach Errichtung der Behälterbehandlungsanlage 1 mit den am Fertigungsort hergestellten Formatteilen 10 eine gegebene Formteilgeometrie FG auf, die nach den kundenseitig übermittelten Behältergeometrien gefertigt sind und dabei zumindest teilweise nicht den tatsächlichen Behältergeometrien der am Aufstellungs- bzw. Produktionsort zu behandelnden Behältern 2 entsprechen.

In anderen Worten entspricht die gegebene IST-Formatteilgeometrie FG nach Errichtung der Behälterbehandlungsanlage 1 von wenigstens einem Formatteil 10 zumindest in einem Formatteilgeometrieabschnitt 10.1 nicht der durch die tatsächliche Behältergeometrie vorgegebenen Soll-Formatteilgeometrie VFG.

Beispielsweise kann der zumindest eine Formatteilgeometrieabschnitt 10.1 des Formatteils 10, der in seiner gegebenen Formatteilgeometrie FG von der vorgegebenen Formatteilgeometrie VGF abweicht, im Bereich der Sterntaschen 13 des Transporteuers 5 oder dem Gewindegang des Schneckenförderers 12 ausgebildet sein.

In Figur 3 ist dies beispielhaft an Hand einer exemplarisch herausgegriffenen Sterntasche 13 dargestellt. Hierbei bildet die durchgezogene schwarze Linie in der Sterntasche 13 die tatsächliche Außenkontur als gegebene IST-Formatteilgeometrie FG, während die gestrichelte Linie die durch die tatsächliche Behältergeometrie vorgegebene SOLL-Formatteilgeometrie VGF des Formatteilgeometrieabschnittes 10.1 darstellt.

Auch können an einem Formatteil 10 mehrere Formatteilgeometrieabschnitte 10.1 ausgebildet sein, die in ihrer gegebenen Formatteilgeometrie FG von der durch die tatsächliche Behältergeometrie vorgegebenen Formatteilgeometrie VFG abweichen.

Erfindungsgemäß weist die Behälterbehandlungsanlage 1 zumindest eine Bearbeitungsvorrichtung 20 zur Anpassung der gegebenen Formatteilgeometrie FG des zumindest einen Formatteils 10 der Behälterbehandlungsanlage 1 an eine durch die tatsächliche Behältergeometrie vorgegebene Formatteilgeometrie VFG auf. In anderen Worten kann also die gegebene Ist-Formatteilgeometrie FG mittels der zumindest einen Bearbeitungsvorrichtung 20 an eine durch die tatsächliche Behältergeometrie vorgegebene Soll-Formatteilgeometrie VFG angepasst werden.

Dabei kann vorgesehen sein, dass die Anpassung der gegebenen Formatteilgeometrie FG des zumindest einen Formatteils 10 an eine durch die tatsächliche Behältergeometrie vorgegebene Formatteilgeometrie VFG mittels der Bearbeitungsvorrichtung 20 im eingebauten, d.h. montierten, Zustand des Formatteils 10 in der Behälterbehandlungsanlage 1 erfolgt, bei der insbesondere eine Demontage des Formatteils 10 aus der Behälterbehandlungsanlage 1 also nicht erforderlich ist.

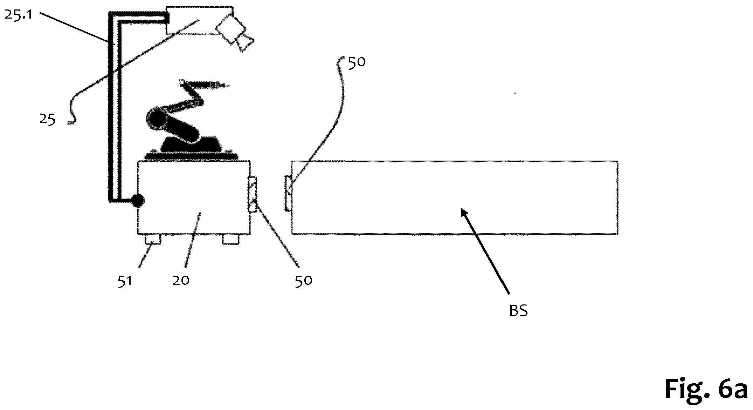

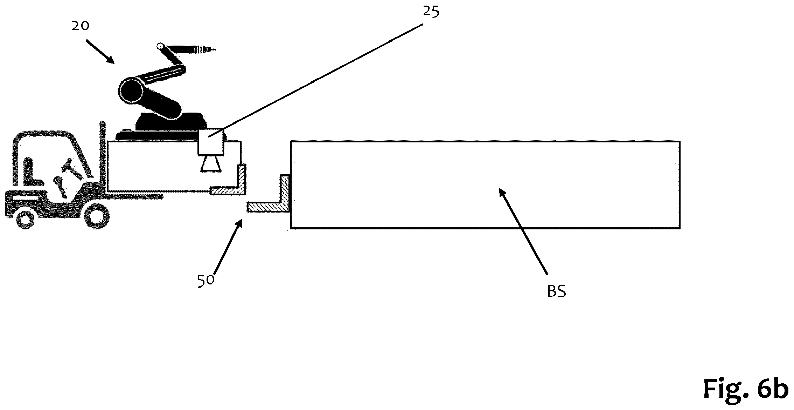

Dabei kann die Bearbeitungsvorrichtung 20 über eine in den Figuren 6a und 6b schematisch dargestellte Schnittstelle 50, beispielsweise ein Interface oder einen Flansch, an der Behälterbehandlungsanlage 1 angeordnet bzw. mit dieser lagefixiert gekoppelt sein. Auch kann die Schnittstelle 50, wie in Figur 6b gezeigt, zur tragenden sowie lagefixierten Halterung der Bearbeitungsvorrichtung 20 ausgebildet sein. Mittels der Schnittstelle 50 ist die Bearbeitungsvorrichtung 20 insbesondere fest, jedoch lösbar, an der Behälterbehandlungsanlage 1 anordenbar.

Es können dabei auch entlang Behälterbehandlungsstrecke BS mehrere Schnittstellen 50 vorgesehen sein, so dass die Bearbeitungsvorrichtung 20 bedarfsgerecht an unterschiedlichen Schnittstellten 50 entlang der Behälterbehandlungsstrecke BS einsetzbar ist.

Hierbei kann es vorteilhaft sein, dass die Bearbeitungsvorrichtung 20 ein eigenständiges Fahrwerk 51, beispielsweise ein Rollenfahrwerk, zum Verfahren der Bearbeitungsvorrichtung 20 auf einer Bodenebene aufweist (Vgl. Figur 6b). Dies ermöglicht einen einfachen und bedarfsgerechten Einsatz der Bearbeitungsvorrichtung 20 an unterschiedlichen Schnittstellen 50 entlang der Behälterbehandlungsstrecke BS.

Insbesondere weist die Bearbeitungsvorrichtung 20 hierbei zur Anpassung zumindest ein Bearbeitungswerkzeug 21 zur mechanischen und/oder schweißenden Bearbeitung zumindest des einen Formateilgeometrieabschnittes 10.1 an eine durch die tatsächliche Behältergeometrie vorgegebene Formatteilgeometrie VFG auf, das an einer Führungs- und Bewegungseinrichtung 22 angeordnet und geführt ist. Unter mechanischen und/oder schweißenden Bearbeitung wird im Rahmen der vorliegenden Erfindung sowohl ein Materialabtrag als auch ein Materialaufbau, also eine Materialzuführung, an dem zumindest einen Formateilgeometrieabschnitt 10.1 verstanden.

Die Führungs- und Bewegungseinrichtung 22 kann als eine mehrere Dreh- und/oder Bewegungsachsen aufweisende Roboterkinematik ausgebildet sein, die mehrere Roboterarme 22.1 aufweist, welche jeweils dreh- oder schwenkbar um eine Drehachse 22.2 miteinander verbunden sind.

Das zumindest eine Bearbeitungswerkzeug 21 kann dabei beispielsweise zur spanenden, schleifenden, auftragsschweißenden, oder wasserstrahlbasierten Bearbeitung des zumindest einen Formatteilgeometrieabschnittes 10.1 des entsprechenden Formatteils 10 ausgebildet sein. Vorzuweise kann das zumindest eine Bearbeitungswerkzeug 21 über eine nur schematisch angedeutete Wechselvorrichtung 23, die beispielsweise als Schnellkupplungssystem ausgebildet ist, an der Führungs- und Bewegungseinrichtung 22 angeordnet sein. Über die Wechselvorrichtung 23 ist ein einfacher Tausch zwischen unterschiedlichen Bearbeitungswerkzeugen 21 an der Führungs- und Bewegungseinrichtung 22 möglich.

Auch kann vorgesehen sein, dass an der Führungs- und Bewegungseinrichtung 22 mehrere Bearbeitungswerkzeuge 21, beispielsweise ein mechanisches Bearbeitungswerkzeug und ein Schweißwerkzeug, angeordnet sind.

Dabei kann an der Führungs- und Bewegungseinrichtung 22 zusätzlich eine Absaugeinrichtung 24 neben dem zumindest einen Bearbeitungswerkzeug 21 vorgesehen sein, um während der Bearbeitung anfallendes Bearbeitungsmaterial abzusaugen.

Dabei ist das zumindest eine an der Führungs- und Bewegungseinrichtung 22 angeordnete Bearbeitungswerkzeug 21 mittels der Führungs- und Bewegungseinrichtung 22 gesteuert verfahrbar sowie betätigbar und zwar abhängig von einer in einer Steuereinheit 30 ausgeführten Steuer- und Auswerteroutine SAR.

Durch die gezielt gesteuerte Führung des wenigstens einen Bearbeitungswerkzeugs 21 abhängig von der in der Steuereinheit 30 ausgeführten Steuer- und Auswerteroutine SAR kann das Bearbeitungswerkzeug 21 an den zumindest einen Formateilgeometrieabschnitt 10.1 des zu bearbeitenden Formatteils 10 verfahren und dieser zumindest eine Formateilgeometrieabschnitt 10.1 an eine durch die tatsächliche Behältergeometrie vorgegebene Formatteilgeometrie VFG angepasst, d.h. bearbeitet, werden.

Mehr im Detail wird hierfür abhängig von der durch die tatsächliche Behältergeometrie vorgegebenen Formatteilgeometrie VFG für das zu bearbeitende Formatteil 10 an dem zumindest einen von der vorgegebenen Formatteilgeometrie VFG abweichenden Formateilgeometrieabschnitt 10.1 wenigstens ein Nacharbeitungsabschnitt 28 auf dessen dreidimensionalen Außenkontur definiert, und ausgehend davon die Steuer- und Auswerteroutine SAR erzeugt, wobei anschließend das zumindest eine Bearbeitungswerkzeug 21 mittels der der Führungs- und Bewegungseinrichtung 22 zumindest an den ermittelten Nacharbeitungsabschnitt 28 gesteuert geführt wird und der jeweilige dem Nacharbeitungsabschnitt 28 zugeordnete Formateilgeometrieabschnitt 10.1 gezielt mittels des zumindest einen Bearbeitungswerkszeuges 21 an die durch die tatsächliche Behältergeometrie vorgegebene Formatteilgeometrie VFG angepasst wird.

Die tatsächliche Behältergeometrie kann beispielweise mittels einer Erfassungseinrichtung 25 erfasst werden und dabei als Sollbearbeitungsdatensatz SBD für die durch die tatsächliche Behältergeometrie vorgegebene Formatteilgeometrie VGF in der Steuereinheit 10 für die Steuer- und Auswerteroutine SAR hinterlegt werden. In Kenntnis der vorgegebenen Formatteilgeometrie VFG, also in Kenntnis der tatsächlichen Behältergeometrie, wird beispielsweise dem Formateilgeometrieabschnitt 10.1, der in seiner gegebenen Formatteilgeometrie FG von der vorgegebenen Formatteilgeometrie VFG abweicht, ein Nacharbeitungsabschnitt 28 zugeordnet.

Neben dem zumindest einen Bearbeitungswerkzeug 21 kann dabei auch eine Erfassungseinrichtung 25 mittels der Wechselvorrichtung 23 auswechselbar an der Führungs- und Bewegungseinrichtung 22 angeordnet sein. Auch die Erfassungseinrichtung 25 kann dabei zur Erfassung der tatsächlichen Behältergeometrie, und damit zur Bereitstellung des Sollbearbeitungssatzes SBD, ausgebildet sein.

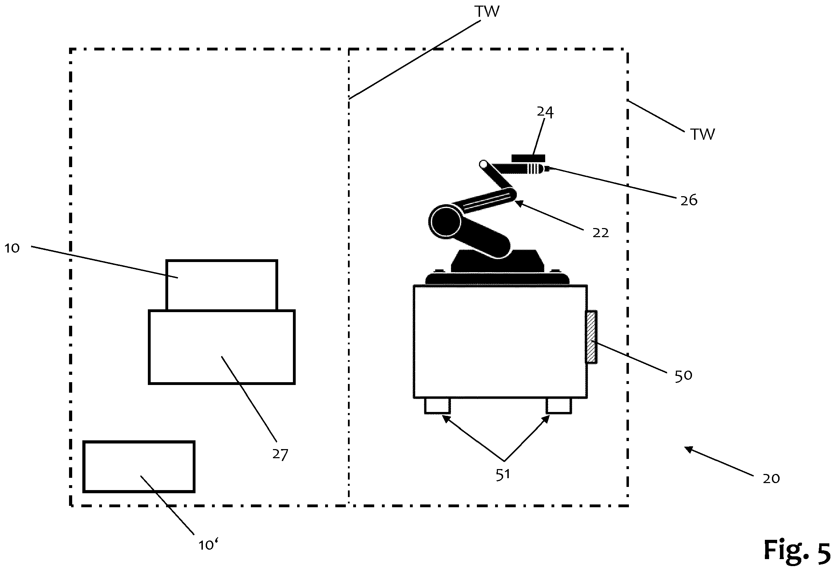

Wie in Figur 5a schematisch angedeutet, kann die Erfassungseinrichtung 25 auch ortsfest über einen Träger 25.1 mit der Bearbeitungsvorrichtung 20 verbunden sein.

Mittels der Erfassungseinrichtung 25 kann der zumindest eine von der tatsächlichen Behältergeometrie in der gegebenen Formatteilgeometrie FG abweichende Formateilgeometrieabschnitt 10.1 optisch erfasst und diesem nachfolgend ein Nacharbeitungsabschnitt 28 zugeordnet werden. Zur optischen Erfassung der gegebenen Formatteilgeometrie FG der Formatteile 10 wird die Erfassungseinrichtung 25 vorzugsweise mittels der Führungs- und Bewegungseinrichtung 22 gesteuert mitgeführt.

Für die gesteuerte Führung der Führungs- und Bewegungseinrichtung 22 und/oder die optische Ermittlung sowie Erfassung des zumindest einen Nacharbeitungsabschnittes 28 ist die Erfassungseinrichtung 25 und/oder die Führungs- und Bewegungseinrichtung 22 mit der Steuereinheit 30 verbunden, in der eine Steuer- und Auswerteroutine SAR ausgeführt wird. Die Steuer- und Auswerteroutine SAR ist neben der Steuerung des Erfassungseinrichtung 25 auch für die Steuerung der Führungs- und Bewegungseinrichtung 22 als auch des zumindest einen Bearbeitungswerkzeuges 21 eingerichtet.

Besonders vorteilhaft kann dabei an der Führungs- und Bewegungseinrichtung 22 sowohl die Erfassungseinrichtung 25 als auch das mindestens eine Bearbeitungswerkzeug 21 angeordnet sein, und zwar derart, dass vor und/oder nach der optischen Erfassung gegebenen Formatteilgeometrie FG und Ermittlung des jeweiligen Nacharbeitungsabschnittes 28 ein Bearbeiten dieses Nacharbeitungsabschnittes 28 mittels des zumindest einen Bearbeitungswerkzeuges 21 erfolgt und zwischen den Funktionalitäten der Erfassungseinrichtung 25 und/oder des mindestens einen Bearbeitungswerkzeuges 21 umgeschaltet werden kann.

Die Erfassungseinrichtung 25 ist insbesondere dazu ausgebildet, zumindest eine Bildaufnahme des in der gegebenen Formatteilgeometrie FG von der tatsächlichen Behältergeometrie abweichenden Formateilgeometrieabschnitt 10.1 zu erfassen und mittels einer Bildverarbeitungseinheit einen Nachbearbeitungsabschnitt 28 zuzuordnen, sowie insbesondere den Formateilgeometrieabschnitt 10.1 als gegebenen IST-Formatteilgeometrie FG und/oder die tatsächliche Behältergeometrie als vorgegeben SOLL-Formatteilgeometrie VFG zu vermessen.

Vorteilhaft kann die Erfassungseinrichtung 25 dabei als 3D-Kamerasystem mit einer Auflösung von bis zu 5µm oder als 3-D Lasermesseinrichtung ausgebildet sein, die zur Erzeugung einer dreidimensionalen Bildaufnahme des wenigstens einen Nacharbeitungsabschnittes 28 und/oder die tatsächliche Behältergeometrie eingerichtet ist. Somit können mittels der Erfassungseinrichtung 25 von der vorgegebenen Formatteilgeometrie VFG abweichende Formateilgeometrieabschnitt 10.1 des Formatteils 10 erfasst und vermessen werden.

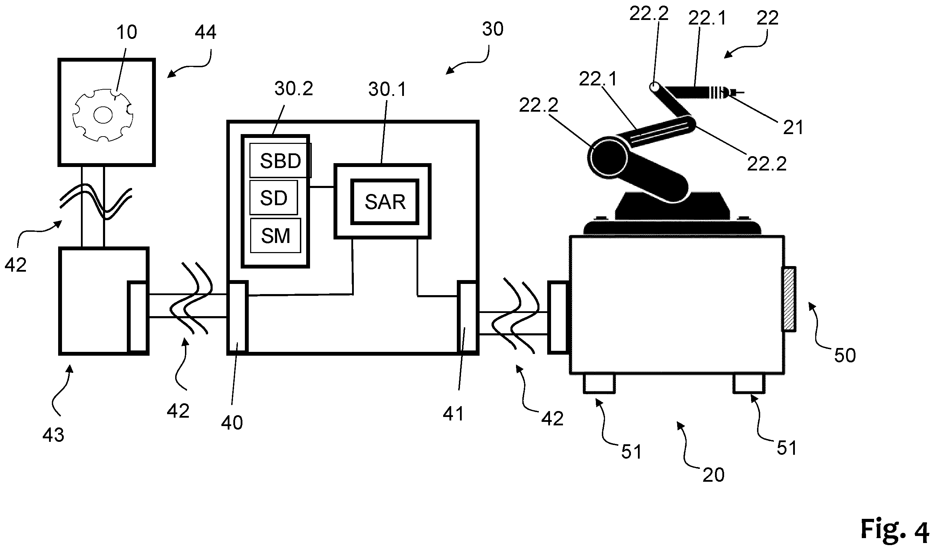

Figur 4 zeigt ein schematisches Blockschaltbild der Steuereinheit 30, in welcher die Steuer- und Auswerteroutine SAR ausgeführt wird. Die Steuereinheit 30 weist hierzu wenigstens eine Prozessoreinheit 30.1 zur Ausführung der Steuer- und Auswerteroutine SAR, eine mit der Prozessoreinheit 30.1 zusammenwirkende Speichereinheit 30.2 zum zumindest zeitweisen Speichern von Prozessparametern und/oder Steuerungsdaten, sowie eine erste und zweite Schnittstelle 40, 41 auf. Die Prozessoreinheit 30.1 ist dabei insbesondere dazu eingerichtet, an der ersten Schnittstelle 40 der Steuereinheit 30 empfangene der tatsächlichen Behältergeometrie mittels der Steuer- und Auswerteroutine SAR in Steuer- und Bearbeitungsdaten SD umzuwandeln, bzw. Steuerbefehle zu definieren, die über die zweite Schnittstelle 41, an die Führungs- und Bewegungseinrichtung 22 übertragbar werden, um diese abhängig von den mittels der Steuer- und Auswerteroutine SAR erzeugten Steuer- und Bearbeitungsdaten SD oder Steuerbefehlen gesteuert an einen vorgegebenen Formatteilgeometrieabschnitte 10.1 der dreidimensionalen Außenkontur des Formatteils 10 zu verfahren und anschließend an die durch die tatsächliche Behältergeometrie vorgegebenen Formatteilgeometrie VFG anzupassen, also zu bearbeiten.

In der Speichereinheit 30.2 können auch bereits vorgegebene Steuer- und Bearbeitungsmodule SM für die Steuer- und Auswerteroutine SAR hinterlegt sein. Auch kann in der Speichereinheit 30.2 als Bearbeitungsmodul SM der Sollbearbeitungsdatensatz SBD eines bereits vorher mittels des Bearbeitungswerkszeuges 21 an die durch die tatsächliche Behältergeometrie vorgegebene Formatteilgeometrie VFG angepassten Formtatteils 10 hinterlegt, insbesondere gespeichert sein. Hierdurch kann auf besonders einfache Weise eine bereits im Vorfeld schon einmal produziertes Formatteil 10 erneut hergestellt werden. Auch Ersatz-Formatteile können hierdurch einfach Vor-Ort reproduziert werden. Mittels der Steuer- und Bearbeitungsmodule SM können vorgegebenen Formatteilgeometrieabschnitte 10.1 der dreidimensionalen Außenkontur des Formatteils 10 bereits vordefinierte Bearbeitungsschritte zugeordnet sein, die dann mittels der Steuer- und Auswerteroutine SAR geladen und in der Prozessoreinheit 30.1 ausgeführt werden können. Auch können anhand derartiger Steuer- und Bearbeitungsmodule SM für die unterschiedlichen Formatteilgeometrieabschnitte 10.1 durchzuführende Bearbeitungsschritte individuell vorgegeben sein.

Dabei kann zum Übertragen der Steuer- und Bearbeitungsdaten SD bzw. Steuerbefehle zwischen der zweiten Schnittstelle 41 und der Führungs- und Bewegungseinrichtung 22 eine drahtlose oder drahtgebunden Datenübertragungsstrecke 42 vorgesehen sein. Die erste Schnittstelle 40 steht dabei ebenfalls über eine Datenübertragungsstrecke 42 zum Übertragen der Sollbearbeitungssatz SBD mit einer Rechnereinheit 43, die beispielweise als Personal Computer, Laptop oder Tablett ausgeführt sein kann, in Verbindung. Die Rechnereinheit 43 ist hierbei zur Erzeugung von Sollbearbeitungssatz SBD eingerichtet und weist die hierzu erforderlichen Programmroutinen auf.

Ferner ist die Rechnereinheit 43 mit einer Anzeigeeinheit 44 verbunden, und zwar kann diese an die Rechnereinheit 43 angeschlossen oder darin integriert sein. Die Anzeigeeinheit 44 ist zur Anzeige von dreidimensionalen Grafikobjekten, insbesondere der dreidimensionalen Außenkontur der Formatteile 10 mit ihrem Formatteilgeometrieabschnitt 10.1 und/oder der tatsächlichen Behältergeometrie an Hand des erfassten 3-D-Scans des Behälters 2 ausgebildet. Insbesondere kann der Sollbearbeitungssatz SBD mittels der Rechnereinheit 33 derart erzeugt werden, dass Formatteilgeometrieabschnitt 10.1 der Formatteile 10 softwarebasiert Nachbearbeitungsabschnitt 28 zugeordnet werden.

Dabei kann die Bearbeitungsvorrichtung 20 auch dazu ausgebildet sein, die Formatteile 10 neben, bzw. außerhalb der Behälterbehandlungsstrecke BS zu bearbeiten, also im ausgebauten, d.h. demontierten, Zustand des entsprechenden Formatteils 10 aus der Behälterbehandlungsanlage 1. Hierfür kann die Führungs- und Bewegungseinrichtung 22 eine Handlingseinrichtung 26, beispielsweise eine Greifereinrichtung, aufweisen, die vorzugsweise mittels der Wechselvorrichtung 23 an der Führungs- und Bewegungseinrichtung 22 anordenbar ist.

Mittels der an der Führungs- und Bewegungseinrichtung 22 angeordneten Handlingseinrichtung 26 kann dabei das entsprechende Formatteile 10 an der Behälterbehandlungsanlage 1 demontiert, beispielsweise herausgenommen, und an einen der Bearbeitungsvorrichtung 20 zugeordneten Werkstückträger 27 bewegt werden. Der Werkstückträger 27 dient dabei zur indexierten Halterung der Formatteile 10 während der Bearbeitung dieser mittels des zumindest ein Bearbeitungswerkzeugs 21.

Dabei kann die Bearbeitungsvorrichtung 20 auch dazu vorgesehen sein, als Rohformatteile ausgebildete Formatteile 10' mit einer gegebenen Formatteilgeometrie FG an eine durch die tatsächliche Behältergeometrie vorgegebene Formatteilgeometrie VFG anzupassen. Hierfür kann die Bearbeitungsvorrichtung 20 beispielsweise derartige Rohformateile im Bereich des Werkstückträger 27 bevorraten und bei Bedarf für die Bearbeitung heranziehen. Es kann als eine Teilfertigung aus Rohformatteilen erfolgen, die zumindest teilweise in ihrer gegebenen Formatteilgeometrie FG der tatsächlichen Behältergeometrie als vorgegebene Formatteilgeometrie VFG entsprechen. Die Bearbeitungsvorrichtung 20 bildet dabei eine Art Bearbeitungszentrum neben der Behälterbehandlungstrecke BS aus.

Hierbei kann auch vorgesehen sein, die Bearbeitungsvorrichtung 20 mittels zumindest einer Trennwand TW von der Behälterbehandlungsstrecke BS getrennt ist. Damit kann verhindert werden, dass während der Bearbeitung auftretender Schutz in die Behälterbehandlungsstrecke BS gelangt.

Die Erfindung wurde voranstehend an Ausführungsbeispielen beschrieben. Es versteht sich, dass eine Vielzahl von Änderungen oder Abwandlungen möglich sind, ohne dass dadurch der durch die Patentansprüche definierte Schutzbereich der Erfindung verlassen wird.

### Bezugszeichenliste

- 1: Behälterbehandlungsanlage
- 2: Behälter
- 3: Behälterbehandlungsvorrichtung
- 5: erster Transporteur
- 6: zweiter Transporteur

- 10; 10`: Formatteil
- 10.1: Formatteilgeometrieabschnitt
- 12: Schneckenförderer
- 13: Sterntasche

- 20: Bearbeitungsvorrichtung
- 21: Bearbeitungswerkzeug
- 22: Führungs- und Bewegungseinrichtung
- 22.1: Roboterarme
- 22.2: Achsen
- 23: Wechselvorrichtung
- 24: Absaugeinrichtung
- 25: Erfassungseinrichtung
- 25.1: Träger
- 26: Handlingseinheit
- 27: Werkstückträger
- 28: Nachbearbeitungsabschnitt

- 30: Steuereinheit
- 30.1: Prozesseinheit
- 30.2: Speichereinheit

- 40: erste Schnittstelle
- 41: zweite Schnittstelle
- 42: Datenübertragungsstrecke
- 43: Rechnereinheit
- 44: Anzeigeeinheit
- 50: Schnittstelle
- 51: Fahrwerk

- A: Behandlungsrichtung
- BS: Behälterbehandlungsstrecke
- MA: Maschinenachse
- B: Drehrichtung
- BP: Behandlungsposition
- FG: gegebene Formatteilgeometrie
- VFG: vorgegebene Formatteilgeometrie
- SAR: Steuer- und Auswerteroutine
- SBD: Sollbearbeitungsdaten
- SD: Steuer- und Bearbeitungsdaten
- SM: Steuer- und Bearbeitungsmodule
- TW: Trennwand

## Patentansprüche

1. Behälterbehandlungsanlage zum Behandeln von Behältern (2) oder dergleichen, umfassend zumindest eine Behälterbehandlungsstrecke (BS) sowie zumindest ein Formatteil (10) mit einer gegebenen Formatteilgeometrie (FG), welches entlang der Behälterbehandlungsstrecke (BS) lösbar an der Behälterbehandlungsanlage (1) angeordnet ist und an eine Behältergeometrie des zu behandelnden Behälters (2) oder dergleichen zumindest teilweise angepasst ist,
wobei die Behälterbehandlungsanlage (1) zumindest eine Bearbeitungsvorrichtung (20) zur Anpassung der gegebenen Formatteilgeometrie (FG) des zumindest einen Formatteils (10) der Behälterbehandlungsanlage (1) an eine durch die tatsächliche Behältergeometrie vorgegebene Formatteilgeometrie (VFG) aufweist, **dadurch gekennzeichnet, dass** die zumindest eine Bearbeitungsvorrichtung (20) das zumindest eine Formatteil (10) abhängig von einer in einer Steuereinheit (30) ausgeführten Steuer- und Bearbeitungsroutine (SAR) an die durch die tatsächliche Behältergeometrie vorgegebene Formatteilgeometrie (VFG) anpasst.

2. Behälterbehandlungsanlage nach Anspruch 1, **dadurch gekennzeichnet, dass** die zumindest eine Bearbeitungsvorrichtung (20) mittels wenigstens einer Schnittstelle (50) fest, jedoch lösbar, an der Behälterbehandlungsstrecke (BS) der Behälterhandlungsanlage (1) angeordnet ist.

3. Behälterbehandlungsanlage nach Anspruch 1 oder 2, **dadurch gekennzeichnet, dass** die Bearbeitungsvorrichtung (20) mittels eines Fahrwerks (51) verfahrbar ausgebildet ist.

4. Behälterbehandlungsanlage nach einem der vorangehenden Ansprüche, **dadurch gekennzeichnet, dass** die Bearbeitungsvorrichtung (20) zur Anpassung der gegebenen Formateilgeometrie (FG) an eine durch die tatsächliche Behältergeometrie vorgegebene Formatteilgeometrie (VFG) im montierten und/oder demontierten Zustand des entsprechend zu bearbeitenden Formatteils (10) der Behälterbehandlungsanlage (1) ausgebildet ist.

5. Behälterbehandlungsanlage nach einem der vorangehenden Ansprüche, **dadurch gekennzeichnet, dass** die Bearbeitungsvorrichtung (20) zur Anpassung der gegebenen Formateilgeometrie (FG) an eine durch die tatsächliche Behältergeometrie vorgegebene Formatteilgeometrie (VFG) des Formatteils (10) zumindest ein an einer Führungs- und Bewegungseinrichtung (22) angeordnetes Bearbeitungswerkzeug (21) zur mechanischen und/oder schweißenden Bearbeitung zumindest eines Formatteilgeomtrieabschnittes (10.1) des entsprechenden Formatteils (10) aufweist.

6. Behälterbehandlungsanlage nach Anspruch 5, **dadurch gekennzeichnet, dass** die Führungs- und Bewegungseinrichtung (22) als eine mehrere Dreh- und/oder Bewegungsachsen aufweisende Roboterkinematik ausgebildet ist, die ein oder mehrere Roboterarme (22.1) aufweist, welche jeweils dreh- oder schwenkbar um eine Drehachse (22.2) miteinander verbunden sind.

7. Behälterbehandlungsanlage nach Anspruch 5 oder 6, **dadurch gekennzeichnet, dass** das zumindest eine Bearbeitungswerkzeug (21) zur spanenden und/oder schleifenden und/oder auftragsschweißenden und/oder wasserstrahlbasierten Bearbeitung des zumindest einen Formatteilgeometrieabschnittes (10.1) ausgebildet ist.

8. Behälterbehandlungsanlage nach einem der Ansprüche 5 bis 7, **dadurch gekennzeichnet, dass** das zumindest eine Bearbeitungswerkzeug (21) mittels einer Wechselvorrichtung (23) an der Führungs- und Bewegungseinrichtung (22) angeordnet ist.

9. Behälterbehandlungsanlage nach einem der Ansprüche 5 bis 8, **dadurch gekennzeichnet, dass** an der Führungs- und Bewegungseinrichtung (22) zusätzlich eine Absaugeinrichtung (24) neben dem zumindest einen Bearbeitungswerkzeug (21) vorgesehen ist.

10. Behälterbehandlungsanlage nach einem der vorangehenden Ansprüche, **dadurch gekennzeichnet, dass** die Behälterbehandlungsanlage (1) zumindest eine Erfassungseinrichtung (25) aufweist, die dazu ausgebildet ist, die gegebene Formatteilgeometrie FG, die tatsächlichen Behältergeometrie sowie den hieran anzupassenden, abweichenden Formateilgeometrieabschnitt (10.1) optisch zu erfassen und diese Daten an eine Steuer- und Auswerteeinheit weiterzuleiten, zur Bestimmung von Art- und Umfang einer nötigen Nachbearbeitung eines oder mehrerer Nacharbeitungsabschnitte (28).

11. Behälterbehandlungsanlage nach Anspruch 10, **dadurch gekennzeichnet, dass** die zumindest eine Erfassungseinrichtung (25) an einem Träger (25.1) und/oder der Führungs- und Bewegungseinrichtung (22) angeordnet ist.

12. Behälterbehandlungsanlage nach Anspruch 10 oder 11, **dadurch gekennzeichnet, dass** die zumindest eine Erfassungseinrichtung (25) als 3D-Kamerasystem oder als 3D-Lasermesseinrichtung ausgebildet ist.

13. Behälterbehandlungsanlage nach einem der vorangehenden Ansprüche, **dadurch gekennzeichnet, dass** die Steuereinheit (30) dazu ausgebildet ist, abhängig von der durch die tatsächliche Behältergeometrie vorgegebenen Formatteilgeometrie (VFG) für das zu bearbeitende Formatteil (10) an dem zumindest einen von der vorgegebenen Formatteilgeometrie (VFG) abweichenden Formateilgeometrieabschnitt (10.1) wenigstens einen Nacharbeitungsabschnitt (28) auf dessen dreidimensionalen Außenkontur zu definieren, und ausgehend davon die Steuer- und Auswerteroutine (SAR) zu erzeugen, wobei anschließend das zumindest eine Bearbeitungswerkzeug (21) mittels der Führungs- und Bewegungseinrichtung (22) zumindest an den ermittelten Nacharbeitungsabschnitt (28) gesteuert zu führen und der jeweilige dem Nacharbeitungsabschnitt (28) zugeordnete Formateilgeometrieabschnitt (10.1) gezielt mittels des zumindest einen Bearbeitungswerkszeuges (21) an die durch die tatsächliche Behältergeometrie vorgegebene Formatteilgeometrie (VFG) anzupassen.

14. Behälterbehandlungsanlage nach einem der vorangehenden Ansprüche, **dadurch gekennzeichnet, dass** die Führungs- und Bewegungseinrichtung (22) eine Handlingseinrichtung (26) aufweist, die vorzugsweise mittels der Wechseleinrichtung (23) an der Führungs- und Bewegungseinrichtung (22) anordenbar ist.

15. Behälterbehandlungsanlage nach einem der vorangehenden Ansprüche, **dadurch gekennzeichnet, dass** die Bearbeitungsvorrichtung (20) einen Werkstückträger (27) zur indexierten Halterung der Formatteile (10) aufweist.

16. Behälterbehandlungsanlage nach einem der vorangehenden Ansprüche, **dadurch gekennzeichnet, dass** die Bearbeitungsvorrichtung (20) mittels zumindest einer Trennwand (TW) von der Behälterbehandlungsstrecke (BS) getrennt ist.

17. Verfahren zum Anpassen von Formatteilen einer Behälterbehandlungsanlage zum Behandeln von Behältern (2) der dergleichen, umfassend zumindest eine Behälterbehandlungsstrecke (BS), wobei entlang der Behälterbehandlungsstrecke (BS) wenigstens ein, an eine Behältergeometrie des zu behandelnden Behälters (2) oder dergleichen zumindest teilweise angepasstes Formatteil (10) mit einer gegebenen Formatteilgeometrie (FG)vorgesehen wird, welches lösbar an der Behälterbehandlungsanlage (1) angeordnet wird, **dadurch gekennzeichnet,**
**dass** die gegebene Formatteilgeometrie (FG) des zumindest einen Formatteils (10) mittels zumindest einer nach den Ansprüchen 1 bis 16 ausgebildeten Bearbeitungsvorrichtung (20) an eine durch die tatsächliche Behältergeometrie vorgegebene Formatteilgeometrie (VFG) angepasst wird.

## Claims

1. Container processing system for processing containers (2) or the like, comprising at least one container processing segment (BS) as well as at least one format part (10) with a predefined format part geometry (FG), which is arranged along the container processing segment (BS) in a detachable manner at the container processing system (1), and is at least partially adapted to a container geometry of the container (2) or the like which is to be processed,
wherein the container processing system (1) comprises at least one processing device (20) for adapting the predefined format part geometry (FG) of the at least one format part (10) of the container processing system (1) to a format part geometry (VFG) which is defined by the actual container geometry, **characterised in that** the at least one processing device (20) adapts the at least one format part (10), dependent on a control and processing routine (SAR) carried out in a control unit (30), to the format part geometry (VFG) defined by the actual container geometry.

2. Container processing system according to claim 1, **characterised in that** the at least one processing device (20) is arranged, by means of at least one interface (50), securely but detachably, to the container processing segment (BS) of the container processing system (1).

3. Container processing system according to claim 1 or 2, **characterised in that** the processing device (20) is configured such as to be movable by means of a moving device (51).

4. Container processing system according to any one of the preceding claims, **characterised in that** the processing device (20) is configured such as to adapt the defined format part geometry (FG) to a format part geometry (VFG) which is defined by the actual container geometry, in the installed and/or non-installed state of the format part (10) of the container processing system (1) which is to be processed accordingly.

5. Container processing system according to any one of the preceding claims, **characterised in that** the processing device (20), for the adaptation of the defined format part geometry (FG) to a format part geometry (VFG) of the format part (10), defined by the actual container geometry, comprises at least one processing tool (21), arranged at a guidance and movement device (22), for the mechanical and/or welding processing of at least one format part geometry section (10.1) of the corresponding format part (10).

6. Container processing system according to claim 5, **characterised in that** the guidance and movement device (22) is configured as a robot kinematics arrangement comprising a plurality of axes of rotation and/or movement, which comprises one or more robot arms (22.1), which in each case are connected to one another in such a way that they can rotate or pivot about an axis of rotation (22.2).

7. Container processing system according to any one of claims 5 or 6, **characterised in that** the at least one processing tool (21) is configured for the material-removing and/or grinding and/or build-up welding and/or water-jet based processing of the at least one format part geometry section (10.1).

8. Container processing system according to any one of claims 5 to 7, **characterised in that** the at least one processing tool (21) is arranged, by means of a changeover device (23), at the guidance and movement device (22).

9. Container processing system according to any one of claims 5 to 8, **characterised in that**, in addition, at least one suction device (24) is provided at the guidance and movement device (22) next to the at least one processing tool (21).

10. Container processing system according to any one of the preceding claims, **characterised in that** the container processing system (1) comprises at least one detection device (25), which is configured such as to detect optically the defined format part geometry FG, the actual container geometry, and the deviating format part geometry section (10.1) which is to be adapted, and then to forward this data to a control and evaluation unit for the determination of the nature and extent of the subsequent processing of one or more subsequent processing sections (28).

11. Container processing system according to claim 10, **characterised in that** the at least one detection device (25) is arranged at a carrier (25.1) and/or at the guidance and movement device (22).

12. Container processing system according to claim 10 or 11, **characterised in that** the at least one detection device (25) is configured as a 3D camera system or as a 3D laser measuring device.

13. Container processing system according to any one of the preceding claims, **characterised in that** the control unit (30) is configured such that, depending on the format part geometry (VFG) defined by the actual container geometry for the format part (10) which is to be processed, at the at least one format part geometry section (10.1) which deviates from the defined format part geometry (VFG), it defines at least one subsequent processing section (28) on its three-dimensional outer contour, and, from this, produces the control and evaluation routine (SAR), wherein, following this, it guides the at least one processing tool (21), by means of the guidance and movement device (22), in a controlled manner at least to the subsequent processing section (28) detected, and adapts the respective format part geometry section (10.1) assigned to the subsequent processing section (28) in a specified manner, by means of the at least one processing tool (21), to the format part geometry (VFG) defined by the actual container geometry.

14. Container processing system according to any one of the preceding claims, **characterised in that** the guidance and movement device (22) comprises a handling device (26), which, preferably by means of the changeover device (23), can be arranged at the guidance and movement device (22).

15. Container processing system according to any one of the preceding claims, **characterised in that** the processing device (20) comprises a workpiece carrier (27) for the indexed holding of the format parts (10).

16. Container processing system according to any one of the preceding claims, **characterised in that** the processing device (20) is separated by means of at least one separating wall (TW) from the container processing segment (BS).

17. Method for adapting format parts of a container processing system for the processing of containers (2) or the like, comprising at least one container processing segment (BS), wherein, along the container processing segment (BS), at least one format part (10), which is at least partially adapted to a container geometry of the container (2) or the like which is to be processed, is provided with a defined format part geometry (FG), which is arranged in a detachable manner at the container processing system (1), **characterised in that** the defined format part geometry (FG) of the at least one format part (10) is adapted by means of at least one processing device (20), configured in accordance with claims 1 to 16, to a format part geometry (VFG) which is defined by the actual container geometry.

## Revendications

1. Installation de traitement de récipient pour le traitement de récipients (2) ou similaires, comprenant au moins un trajet de traitement de récipient (BS) ainsi qu'au moins un élément de format (10) avec une géométrie d'élément de format (FG) qui est agencé le long de la voie de traitement de récipient (BSS) de manière amovible au niveau de l'installation de traitement de récipient (1) et est adapté au moins partiellement à une géométrie de récipient du récipient (2) à traiter ou similaires,
dans laquelle l'installation de traitement de récipient (1) présente au moins un dispositif d'usinage (20) pour l'adaptation de la géométrie d'élément de format (FG) donnée d'au moins un élément de format (10) de l'installation de traitement de récipient (1) à une géométrie d'élément de format (VFG) prédéfinie par la géométrie de récipient réelle, **caractérisée en ce que** l'au moins un dispositif d'usinage (20) adapte l'au moins un élément de format (10) en fonction d'une routine de commande et d'usinage (SAR) réalisée dans une unité de commande (30) à la géométrie d'élément de format (VFG) prédéfinie par la géométrie de récipient réelle.

2. Installation de traitement de récipient selon la revendication 1, **caractérisée en ce que** l'au moins un dispositif d'usinage (20) est agencé au moyen d'au moins une interface (50) fixement, toutefois de manière amovible, au niveau du trajet de traitement de récipient (BS) de l'installation de traitement de récipient (1).

3. Installation de traitement de récipient selon la revendication 1 ou 2, **caractérisée en ce que** le dispositif d'usinage (20) est réalisé de manière déplaçable au moyen d'un mécanisme de roulement (51).

4. Installation de traitement de récipient selon l'une quelconque des revendications précédentes, **caractérisée en ce que** le dispositif d'usinage (20) est réalisé pour l'adaptation de la géométrie d'élément de format (FG) donnée à une géométrie d'élément de format (VFG) prédéfinie par la géométrie de récipient réelle dans l'état monté et/ou démonté de l'élément de format (10) à usiner de manière correspondante de l'installation de traitement de récipient (1).

5. Installation de traitement de récipient selon l'une quelconque des revendications précédentes, **caractérisée en ce que** le dispositif d'usinage (20) présente, pour l'adaptation de la géométrie d'élément de format (FG) donnée à une géométrie d'élément de format (VFG) de l'élément de format (10) prédéfinie par la géométrie de récipient réelle, au moins un outil d'usinage (21) agencé au niveau d'un dispositif de guidage et de déplacement (22) pour l'usinage mécanique et/ou par soudage au moins d'une section de géométrie d'élément de format (10.1 de l'élément de format (10) correspondant.

6. Installation de traitement de récipient selon la revendication 5, **caractérisée en ce que** le dispositif de guidage et de déplacement (22) est réalisé en tant que cinématique de robot présentant plusieurs axes de rotation et/ou de déplacement qui présente un ou plusieurs bras de robot (22.1) qui sont reliés entre eux respectivement de manière rotative ou pivotante autour d'un axe de rotation (22.2).

7. Installation de traitement de récipient selon la revendication 5 ou 6, **caractérisée en ce que** l'au moins un outil d'usinage (21) est réalisé pour l'usinage par enlèvement de copeaux et/ou affûtage et/ou soudage à superposition et/ou basé sur un jet d'eau d'au moins une section de géométrie d'élément de format (10.1).

8. Installation de traitement de récipient selon l'une quelconque des revendications 5 à 7, **caractérisée en ce que** l'au moins un outil d'usinage (21) est agencé au moyen d'un dispositif de changement (23) au niveau du dispositif de guidage et de déplacement (22).

9. Installation de traitement de récipient selon l'une quelconque des revendications 5 à 8, **caractérisée en ce qu'**en outre, un dispositif d'aspiration (24) est prévu au niveau du dispositif de guidage et de déplacement (22) à côté de l'au moins un outil d'usinage (21).

10. Installation de traitement de récipient selon l'une quelconque des revendications précédentes, **caractérisée en ce que** l'installation de traitement de récipient (1) présente au moins un dispositif de détection (25) qui est réalisé afin de détecter optiquement la géométrie d'élément de format FG donnée, la géométrie de récipient réelle ainsi que la section de géométrie d'élément de format (10.1) différente, à adapter à celle-ci et de transmettre ces données à une unité de commande et d'évaluation, pour la détermination du type et de l'étendue d'un post-usinage nécessaire d'une ou plusieurs sections de post-usinage (28).

11. Installation de traitement de récipient selon la revendication 10, **caractérisée en ce que** l'au moins un dispositif de détection (25) est agencé au niveau d'un support (25.1) et/ou du dispositif de guidage et de déplacement (22).

12. Installation de traitement de récipient selon la revendication 10 ou 11, **caractérisée en ce que** l'au moins un dispositif de détection (25) est réalisé en tant que système de caméra 3D ou en tant que dispositif de mesure laser 3D.

13. Installation de traitement de récipient selon l'une quelconque des revendications précédentes, **caractérisée en ce que** l'unité de commande (30) est réalisée afin de définir en fonction de la géométrie d'élément de format (VFG) prédéfinie par la géométrie de récipient réelle pour l'élément de format (10) à usiner au niveau de l'au moins une section de géométrie d'élément de format (10.1) différente de la géométrie d'élément de format (VFG) prédéfinie au moins une section de post-usinage (28) sur son contour extérieur en trois dimensions, et à partir de celle-ci de générer la route de commande et d'évaluation (SAR), dans laquelle de guider de manière commandée ensuite l'au moins un outil d'usinage (21) au moyen du dispositif de guidage et de déplacement (22) au moins au niveau de la section de post-usinage (28) calculée et d'adapter la section de géométrie d'élément de format (10.1) respective associée à la section de post-usinage (28) de manière ciblée au moyen de l'au moins un outil d'usinage (21) à la géométrie d'élément de format (VFG) prédéfinie par la géométrie de récipient réelle.

14. Installation de traitement de récipient selon l'une quelconque des revendications précédentes, **caractérisée en ce que** le dispositif de guidage et de déplacement (22) présente un dispositif de manipulation (26) qui peut être agencé de préférence au moyen du dispositif de changement (23) au niveau du dispositif de guidage et de déplacement (22).

15. Installation de traitement de récipient selon l'une quelconque des revendications précédentes, **caractérisée en ce que** le dispositif d'usinage (20) présente un porte-pièce (27) pour le support indexé des éléments de format (10).

16. Installation de traitement de récipient selon l'une quelconque des revendications précédentes, **caractérisée en ce que** le dispositif d'usinage (20) est séparé au moyen d'au moins une paroi de séparation (TW) du trajet de traitement de récipient (BS).

17. Procédé d'adaptation d'éléments de format d'une installation de traitement de récipient pour le traitement de récipients (2) ou similaires, comprenant au moins un trajet de traitement de récipient (BS), dans lequel le long du trajet de traitement de récipient (BS), au moins un élément de format (10) adapté au moins partiellement à une géométrie de récipient du récipient (2) à traiter ou similaire est prévu avec une géométrie d'élément de format (FG) donnée, lequel est agencé de manière amovible au niveau de l'installation de traitement de récipient (1), **caractérisé en ce que** la géométrie d'élément de format (FG) donnée d'au moins un élément de format (10) est adaptée au moyen d'au moins un dispositif d'usinage (20) réalisé selon les revendications 1 à 16 à une géométrie d'élément de format (VFG) prédéfinie par la géométrie de récipient réelle.
